# EUROPEAN PATENT SPECIFICATION

(11) **EP 3 153 478 B1**
(45) Date of publication and mention of the grant of the patent: **13.03.2019**
(21) Application number: 16188185.9
(22) Date of filing: 09.09.2016
(51) Int. Cl.: C03B 37/014

(54) **APPARATUS FOR PRODUCING POROUS GLASS PREFORM**
VORRICHTUNG ZUR HERSTELLUNG EINER PORÖSEN GLASVORFORM
APPAREIL DE PRODUCTION D'UNE PRÉFORME DE VERRE POREUX

(30) Priority: 05.10.2015 JP 2015197363
(43) Date of publication of application: 12.04.2017
(73) Proprietor: Shin-Etsu Chemical Co., Ltd., Chiyoda-ku, Tokyo 100-0004 (JP)
(72) Inventor: KOJIMA, Hiroki, Ibaraki 314-0102 (JP); YANAGA, Tomihisa, Ibaraki 314-0102 (JP)
(74) Representative: Vossius & Partner Patentanwälte Rechtsanwälte mbB

(56) References cited:
- JP-A- H07 109 142
- JP-A- H09 188 523
- JP-A- H09 286 629
- JP-A- H10 265 236
- JP-A- 2000 086 270
- JP-A- 2004 010 377
- JP-A- 2004 315 282
- US-A- 4 317 667

## Description

### BACKGROUND

### Technical Field

The present invention relates to an apparatus for producing a porous glass preform used for production of optical fiber.

### Related Art

Optical fibers are produced by wire-drawing a glass rod, what is called an "optical fiber preform," obtained by decreasing a diameter of a glass preform with a large diameter to a diameter suitable for the wire-drawing. The glass preform with a large diameter is obtained by sintering a porous glass preform (a soot body), produced by a vapor phase axial deposition (VAD method) or an outside vapor deposition (OVD method), by a heat-treatment to form it into a transparent glass.

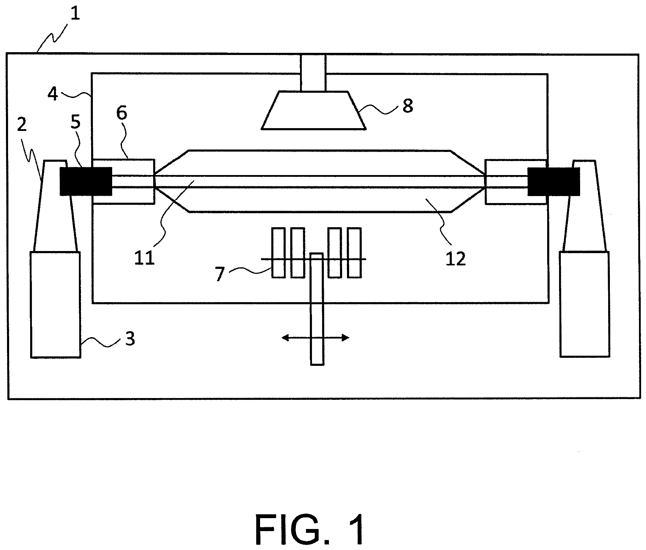

FIG. 1 shows one example of an apparatus for producing a porous glass preform by an OVD method. An apparatus 1 for producing a porous glass preform contains a rotation mechanism 2, a weight detector 3, a reaction vessel 4, a base material gripper 5, a cover 6, a burner 7, and an exhaust hood 8.

The reaction vessel 4 is provided in the production apparatus 1, and a base glass rod 11, which is also called as "starting member", is disposed in the reaction vessel 4 in a state in which both ends of the rod 11 are supported by the base material grippers 5. Each base material gripper 5 is covered with a cover 6 in the reaction vessel 4 in order to prevent exposure of the gripper to a high temperature caused by a burner 7 for deposition of glass fine particles (hereinafter referred to as a "burner"). Each base material gripper 5 is provided so that it protrudes from the inside of the reaction vessel 4 to the outside of the reaction vessel 4 and the protruded part thereof is set on the rotation mechanism 2 provided outside the reaction vessel 4. The rotation mechanism 2 rotates the base glass rod 11, gripped by the base material gripper 5, around the axis of the rod 11. The rotation mechanism 2 is provided on the weight detector 3, which performs a weight measurement of a product.

Glass fine particles (soot), produced by flame hydrolysis reaction of the raw materials using the burner 7, are blown onto a peripheral surface of the rotating base glass rod 11, and are deposited in a direction of a diameter of the base glass rod 11. The soot body 12 is formed in a manner in which the burner 7 is reciprocated along a longitudinal direction of the base glass rod 11, and the deposition of the glass fine particles is continued until a pre-determined outer diameter is obtained. The burner 7 is retreated so that a pre-determined gap between the burner 7 and the soot body 12 is secured according to the increase of the diameter of the soot body 12.

The exhaust hood 8 exhausts exhaust gas, generated by combustion of the raw materials, outside the production apparatus 1. The production apparatus 1 also includes a clean air supply device for supplying clean air, which is a cleaning gas, (not shown), and the clean air is supplied into the reaction vessel 4 (see, for example, JP 2003-40626 A). The clean air is air that passes through a filter capable of catching particles, such as an HEPA filter. JP 2004 315282 A discloses an apparatus for producing a glass preform by depositing glass particles around a starting preform. A heat shield board is set inside the deposition vessel.

### SUMMARY

Recently, in order to reduce a production cost, methods for producing a preform having a high productivity have been required. For example, a larger soot body can be obtained in one production by moving a burner to the vicinity of a base material gripper when the burner reciprocates. However, when the burner is moved to the vicinity of the base material gripper, the following problems occur.

The reaction formula of starting gases, when silicon oxide, which is turned into a soot, is produced by a flame hydrolysis reaction, is as follows:

2H₂+O₂ → 2H₂O 2H₂O+SiCl₄ → SiO₂+4HCl

As shown above, a large amount of hydrogen chloride gas is generated as a by-product, apart from the generation of silicon oxide. When the base material gripper is exposed to the hydrogen chloride gas, the base material gripper is corroded or rusted. Further, the heat cycle caused by the reciprocating motion of the burner provides large thermal stress to the base material gripper.

The rusts and the thermal stress cause troubles of the base material gripper. In addition, there are gaps on parts at which the base material gripper of the reaction vessel is provided, and outflow of the hydrogen chloride gas from the gaps leads to the generation of rusts on the rotation mechanism.

The thermal stress caused by the burner can be reduced by covering the base material gripper with a cover. However, when the base material gripper is covered with the cover, a small gap is to be left between the cover and the starting member, because the starting member needs to be rotatable. The hydrogen chloride gas flows from the gap, and thus even if the base material gripper is covered with the cover, the base material gripper is still exposed to the hydrogen chloride gas . Further, in a configuration in which the starting member is rotated by the rotation of the base material gripper itself, a small gap is also to be left between the reaction vessel and the base material gripper, because the base material gripper needs to be rotatable. As a result, when the hydrogen chloride gas flows to the inside of the cover, the hydrogen chloride gas flows outside the reaction vessel from the gap, and thus the rotation mechanism, which is disposed outside the reaction vessel, is also exposed to the hydrogen chloride gas.

The present invention aims at providing an apparatus for producing a porous glass preform, which can suppress the generation of rusts on a base material gripper or a rotation mechanism upon the production of the porous glass preform.

The present invention is defined by the independent claims. Preferred embodiments are defined in the dependent claims.

The apparatus for producing a porous glass preform of the present invention is an apparatus for producing a porous glass preform formed by depositing glass fine particles, produced by a flame hydrolysis reaction using a burner, on a starting member gripped by a base material gripper in a reaction vessel, wherein the base material gripper is covered with a cover, and includes a mechanism to supply gas to the inside of the cover to cause the gas to flow from the inside of the cover to the inside of the reaction vessel. By forming the flow of the gas from the inside of the cover to the inside of the reaction vessel, the inflow of hydrogen chloride gas, generated by a flame hydrolysis reaction, to the inside of the cover can be prevented, and the generation of rusts, caused by the exposure of the base material gripper and the rotation mechanism to the hydrogen chloride gas, can be prevented. In addition, the present invention can be realized only by covering the base material gripper with the cover and adding the mechanism to supply the gas to the inside of the cover, and thus it is not necessary to significantly change the structure of the reaction vessel. Thus, the present invention can be easily and inexpensively realized.

It is desirable to adjust a linear velocity V of the hydrogen chloride gas flowing from the inside of the cover to the inside of the reaction vessel to 0.001 m/second < V < 1 m/second, in terms of the effective prevention of the inflow of the gas and the acquisition of strength of a product.

The gas supplied to the inside of the cover is gas which does not generate rusts on the base material gripper and the rotation mechanism and does not affect the flame hydrolysis reaction in the reaction vessel. It is preferable to use, for example, clean air having 100 or less, per cubic foot, of particles with a diameter of 0.3 µm or less.

### BRIEF DESCRIPTION OF THE DRAWINGS

FIG. 1 is a view showing an exemplary configuration of a conventional apparatus for producing a porous glass preform;
FIG. 2 is a view showing an exemplary configuration of an apparatus for producing a porous glass preform of the present invention;
FIG. 3 is a graph showing measurement results of a hydrogen chloride concentration inside a cover per linear velocity; and
FIG. 4 is a graph showing measurement results of a hydrogen chloride concentration outside a reaction vessel per linear velocity.

### DETAILED DESCRIPTION

Embodiments of the present invention are explained referring to drawings below. The same number is applied to a common constituent element in drawings including the drawings used in BACKGROUND.

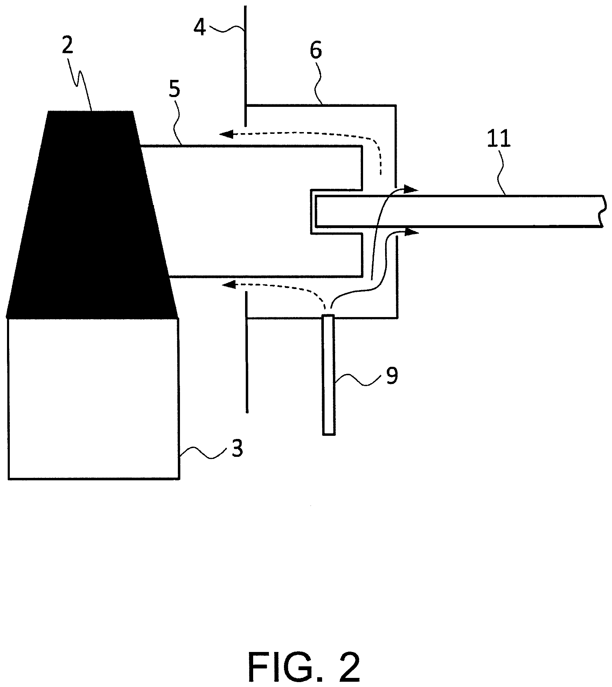

An apparatus for producing a porous glass preform of the present invention has a configuration in which a gas supply tube 9, which supplies gas to the inside of a cover 6, is added to a conventional apparatus 1 for producing a porous glass preform shown in FIG. 1. FIG. 2 shows a part of the apparatus for producing a porous glass preform of the present invention, which is different from a conventional configuration.

When the cover 6 is put over the base material gripper 5, a space is usually provided between the base material gripper 5 and the cover 6. When the base material gripper 5 is covered with the cover 6, a small gap must be left between the cover 6 and the starting member 11, as shown in FIG. 2, because the starting member 11 needs to be rotatable. In addition, in a configuration in which the starting member 11 is rotated by the rotation of the base material gripper itself, a small gap is also needed to be left between the reaction vessel 4 and the base material gripper 5, because the base material gripper 5 needs to be rotatable as shown in Fig. 2.

In the present invention, a gas supply tube 9, which supplies gas to the inside of the cover 6, is provided as shown in FIG. 2, from which gas is supplied to the inside of the cover 6. In this way, as shown by allows of solid lines in FIG. 2, gas supplied to the inside of the cover 6 flows from a gap between the cover 6 and the starting member 11 into the reaction vessel 4. As described above, by forming the flow of the gas from the inside of the cover 6 to the inside of the reaction vessel 4, the inflow of hydrogen chloride gas, generated by a flame hydrolysis reaction, to the inside of the cover 6 can be prevented, and the exposure of the base material gripper 5 to the hydrogen chloride gas can be prevented. In addition to the fact that the hydrogen chloride gas does not flow to the inside of the cover 6, because the gas supplied to the inside of the cover 6 forms the flow of the gas from the gap between the reaction vessel 4 and the base material gripper 5 to the outside of the reaction vessel 4, the exposure of the rotation mechanism 2 outside the reaction vessel 4 to the hydrogen chloride gas can also be prevented.

In order to effectively prevent the inflow of the hydrogen chloride gas, it is necessary to cause the gas to flow from the inside of the cover 6 to the inside of the reaction vessel 4 at a certain degree of linear velocity. On the other hand, if the linear velocity is too fast, the deposition becomes uneven due to disturbance of flam of the burner 7 caused by the gas flowing from the inside of the cover 6 to the inside of the reaction vessel 4. Thus resulting product is easily cracked. For these reasons, the linear velocity of the gas flowing from the inside of the cover 6 to the inside of the reaction vessel 4 may be decided while taking a concentration of the hydrogen chloride allowable for the flow to the inside of the cover 6 and a yield of a desired product into consideration.

The gas supplied to the inside of the cover 6 is gas which does not generate rusts on the base material gripper 5 and the rotation mechanism 2 and does not affect the flame hydrolysis reaction in the reaction vessel 4. It is preferable to use, for example, clean air having 100 or less, per cubic foot, of particles with a diameter of 0.3 µm or less.

As described above, by forming the flow of the gas from the inside of the cover to the inside of the reaction vessel, the inflow of the hydrogen chloride gas, generated by the flame hydrolysis reaction, to the inside of the cover can be prevented, and the generation of the rusts, caused by the exposure of the base material gripper and the rotation mechanism to the hydrogen chloride gas, can be prevented. Furthermore, the present invention can be realized only by covering the base material gripper with the cover and adding the mechanism to supply gas to the inside of the cover, and thus it is not necessary to significantly change the structure of the reaction vessel. Thus, the present invention can be easily and inexpensively realized.

Each constituent element in the apparatus for producing a porous glass preform of the present invention may be combined or divided as necessary.

### [Examples]

A hydrogen chloride concentration (ppm) outside the reaction vessel 4, and a hydrogen chloride concentration (ppm) inside the cover 6 were measured while changing a linear velocity (m/second) of gas flowing from the inside of the cover 6 to the inside of the reaction vessel 4, and whether or not a product, which obtained at each linear velocity, was cracked was tested.

The production method of the product is described. As a base glass rod 11, a quartz rod having a diameter of 55 mm was used. Glass fine particles were produced by flame hydrolysis reaction of a raw material using a burner 7, the particles were blown onto a peripheral surface of the rotating base glass rod 11 to deposit the particles in a diameter direction, and the burner 7 was reciprocated along the longitudinal direction of the base glass rod 11, whereby a soot body 12 was formed. The deposition was continued until the weight of the soot body 12 reached 130 kg. The combustion exhaust gas was exhausted from an exhaust hood 8 outside the production apparatus 1. The production time of the preform was about 40 hours.

The burner 7 including a multiplex tube with first to fifth tubes in which eight small nozzles were disposed between a second tube and a third tube was used. SiCl₄ and O₂ were supplied to the first tube at 18 L/minute and 18.7 L/minute respectively. N₂ was supplied to the second tube at 16 L/minute. H₂ was supplied to the third tube at 630 L/minute. O₂ was supplied to the nozzles at 88 L/minute. Air was supplied to a fourth tube at 20 L/minute. O₂ was supplied to the fifth tube at 170 L/minute. At this time, H₂ and O₂ are reacted to produce H₂O. Also, H₂O and SiCl₄ were reacted to produce SiO₂. The SiO₂ was deposited on the base glass rod 11 to obtain a soot body 12. N₂ and the air were used for preventing burning of the burner 7 caused by the combustion reaction. In this test, the deposition was performed under the gas conditions described above, and the gas was supplied to the inside of the cover 6. At this time, as the gas, clean air was used which was prepared by using an HEPA filter so that the number of particles having a dimeter of 0.3 µm or less was adjusted to 100 particles or less per cubic foot. At that time, the linear velocity of the gas flowing from the inside of the cover to the inside of the reaction vessel was adjusted by adjusting the supply amount of the clean air.

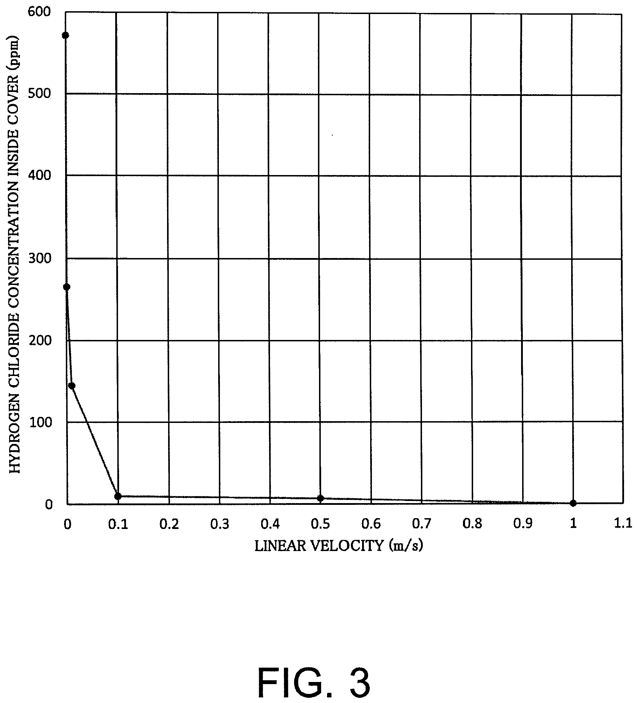

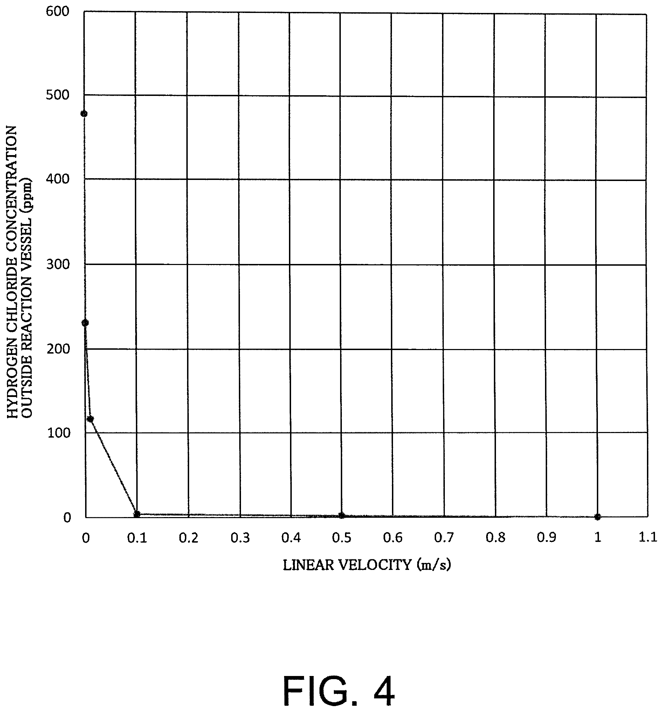

One product was produced in Example 1 wherein the linear velocity was adjusted to 0.01 m/second, one product was produced in Example 2 wherein the linear velocity was adjusted to 0.1 m/second, one product was produced in Example 3 wherein the linear velocity was adjusted to 0.5 m/second, one product was produced in Comparative Example 1 wherein the linear velocity was adjusted to 0 m/second (no gas supplied), one product was produced in Comparative Example 2 wherein the linear velocity was adjusted to 0.001 m/second, and one product was produced in Comparative Example 3 wherein the linear velocity was adjusted to 1.0 m/second. Hydrogen chloride concentration measuring devices were provided inside the cover 6 and outside the reaction vessel 4, which are not shown in FIG. 2, and hydrogen chloride (HCl) concentrations in each Example were measured. The measurement were performed 10 hours after the beginning of the production. The test results are shown in Table 1, FIG. 3 and FIG. 4.

**[Table 1]**

| | HCL Concentration inside Cover (ppm) | HCL Concentration outside Reaction Vessel (ppm) | Cracking of Product |
|---|---|---|---|
| Example 1 (Linear velocity 0.01m/s) | 145 | 117 | Absent |
| Example 2 (Linear velocity 0.1m/s) | 10 | 4 | Absent |
| Example 3 (Linear velocity 0.5m/s) | 7 | 2 | Absent |
| Comparative Example 1 (Linear velocity Om/s) | 571 | 478 | Absent |
| Comparative Example 2 (Linear velocity 0.001m/s) | 265 | 231 | Absent |
| Comparative Example 3 (Linear velocity 1.0m/s) | 0 | 0 | Present |

In Example 1, the hydrogen chloride concentration inside the cover was 145 ppm, the hydrogen chloride concentration outside the reaction vessel was 117 ppm, and the produce was not cracked. In Example 2, the hydrogen chloride concentration inside the cover was 10 ppm, the hydrogen chloride concentration outside the reaction vessel was 4 ppm, and the product was not cracked. In Example 3, the hydrogen chloride concentration inside the cover was 7 ppm, the hydrogen chloride concentration outside the reaction vessel was 2 ppm, and the product was not cracked. In Comparative Example 1, the hydrogen chloride concentration inside the cover was 571 ppm, the hydrogen chloride concentration outside the reaction vessel was 478 ppm, and the product was not cracked. In Comparative Example 2, the hydrogen chloride concentration inside the cover was 265 ppm, the hydrogen chloride concentration outside the reaction vessel was 231 ppm, and the product was not cracked. In Comparative Example 3, the hydrogen chloride concentration inside the cover and the hydrogen chloride concentration outside the reaction vessel were both 0 ppm, and the product was cracked.

From the test results, it was found that when the linear velocity V of the clean air from the inside of the cover to the inside of the reaction vessel was 0.01 m/second to 1.0 m/second, the hydrogen chloride concentrations inside the cover and outside the reaction vessel could be suppressed to 200 ppm at which the generation of rusts may possibly be suppressed or less . When the linear velocity was 1.0 m/s, the product was cracked. This suggests that when the linear velocity of the clean air is too slow, the inflow of the hydrogen chloride gas inside the cover and outside the reaction vessel cannot be sufficiently suppressed, and the hydrogen chloride concentrations become high and the rusts are easily generated. On the other hand, when the linear velocity of the clean air is too fast, the clean air flowing from the inside of the cover to the inside of the reaction vessel disturbs flame of the burner 7 to cause a uneven deposition, thus resulting the formation of a produce which is easily cracked. It is found that the rusts on the grip part and the rotation mechanism can be prevented and it is difficult to crack the product by appropriately maintaining the linear velocity of the clean air from the inside of the cover to the inside of the reaction vessel.

## Claims

1. An apparatus (1) comprising a reaction vessel (4), a base material gripper (5), a rotation mechanism (2) and a burner (7), said apparatus being adapted for producing a porous glass preform formed by depositing glass fine particles, produced by a flame hydrolysis reaction using the burner (7), on a starting member (11) gripped by the base material gripper (5) in the reaction vessel (4),
wherein the base material gripper (5) is provided so that it protrudes from the inside of the reaction vessel (4) to the outside of the reaction vessel (4) and the protruded part thereof is set on the rotation mechanism (2) provided outside the reaction vessel (4),
and wherein said apparatus is **characterized in that** it further comprises:
a cover (6) in the reaction vessel (4) that covers the base material gripper (5), and
a means for supplying gas adapted to supply gas to an inside of the cover (6) such that the gas is caused to flow from the inside of the cover (6) to an inside of the reaction vessel (4).

2. Use of the apparatus (1) according to claim 1 for producing a porous glass preform formed by depositing glass fine particles, produced by a flame hydrolysis reaction using the burner (7), on a starting member (11) gripped by the base material gripper (5) in the reaction vessel (4), wherein gas is supplied to an inside of the cover (6) and is caused to flow from the inside of the cover (6) to an inside of the reaction vessel (4), wherein the gas flows at a linear velocity V of 0.001 m/second < V < 1 m/second.

3. Use of the apparatus (1) according to claim 2, wherein the gas is clean air having 100 or less, per cubic foot, of particles with a diameter of 0.3 µm or less.

## Patentansprüche

1. Vorrichtung (1), die ein Reaktionsgefäß (4), eine Greifeinheit (5) für Basismaterial, einen Rotationsmechanismus (2) und einen Brenner (7) aufweist, wobei die Vorrichtung dazu geeignet ist, eine poröse Glasvorform herzustellen, die durch Abscheiden von Glasfeinpartikeln, die durch eine Flammenhydrolysereaktion mittels des Brenners (7) hergestellt werden, auf einem Ausgangselement (11), das von der Greifeinheit (5) für Basismaterial ergriffen wird, in dem Reaktionsgefäß ausgebildet wird,
wobei die Greifeinheit (5) für das Basismaterial so vorgesehen ist, dass sie vom Innenraum des Reaktionsgefäßes (4) nach außen hervorsteht, und dass das davon hervorstehende Teil auf dem Rotationsmechanismus (2) angeordnet ist, der außerhalb des Reaktionsgefäßes (4) vorgesehen ist,
und wobei die Vorrichtung **dadurch gekennzeichnet ist, dass** sie weiterhin aufweist:
eine Abdeckung (6) in dem Reaktionsgefäß (4), die die Greifeinheit (5) für das Basismaterial abdeckt, und
ein Mittel zum Zuleiten von Gas, das dazu geeignet ist, Gas in einen Innenraum der Abdeckung (6) zu leiten, sodass das Gas veranlasst wird, von dem Innenraum der Abdeckung (6) zu einem Innenraum des Reaktionsgefäßes (4) zu fließen.

2. Verwenden der Vorrichtung (1) nach Anspruch 1, um eine poröse Glasvorform herzustellen, die durch Abscheiden von Glasfeinpartikeln, die durch eine Flammenhydrolysereaktion mittels des Brenners (7) hergestellt werden, auf einem Ausgangselement (11), das von der Greifeinheit (5) des Basismaterials ergriffen wird, im Reaktionsgefäß (4) ausgebildet wird, wobei das Gas einem Innenraum der Abdeckung (6) zugeführt wird und veranlasst wird, von dem Innenraum der Abdeckung (6) zu einem Innenraum des Reaktionsgefäßes (4) zu fließen, wobei das Gas in einer linearen Geschwindigkeit V von 0,001 m/Sekunde < V < 1 m/Sekunde fließt.

3. Verwendung der Vorrichtung (1) nach Anspruch 2, wobei das Gas saubere Luft ist, die 100 Partikel oder weniger pro Kubikfuß mit einem Durchmesser von 0,3 µm oder weniger hat.

## Revendications

1. Appareil (1) comprenant un récipient à réaction (4), un organe de préhension de matériau de base (5), un mécanisme de rotation (2) et un brûleur (7), ledit appareil étant adapté pour produire une préforme de verre poreux formée en déposant des particules fines de verre, produite par une réaction d'hydrolyse à la flamme utilisant le brûleur (7), sur un élément de départ (11) saisi par l'organe de préhension de matériau de base (5) dans le récipient à réaction (4),
dans lequel l'organe de préhension de matériau de base (5) est prévu de manière qu'il fasse saillie de l'intérieur du récipient à réaction (4) à l'extérieur du récipient à réaction (4) et la partie en saillie de celui-ci est placée sur le mécanisme de rotation (2) prévu à l'extérieur du récipient à réaction (4),
et dans lequel ledit appareil est **caractérisé en ce qu'**il comprend en outre :
un capot (6) dans le récipient à réaction (4) qui couvre l'organe de préhension de matériau de base (5), et
des moyens de fourniture de gaz adaptés pour fournir du gaz à un intérieur du capot (6) de sorte que le gaz soit amené à s'écouler de l'intérieur du capot (6) à un intérieur du récipient à réaction (4).

2. Utilisation de l'appareil (1) selon la revendication 1 pour produire une préforme de verre poreux formée en déposant des particules fines de verre, produite par une réaction d'hydrolyse à la flamme utilisant le brûleur (7), sur un élément de départ (11) saisi par l'organe de préhension de matériau de base (5) dans le récipient à réaction (4), dans lequel du gaz est fourni à un intérieur du capot (6) et est amené à s'écouler de l'intérieur du capot (6) à un intérieur du récipient à réaction (4), dans lequel le gaz s'écoule à une vitesse linéaire V de 0,001 m/seconde < V < 1 m/seconde.

3. Utilisation de l'appareil (1) selon la revendication 2, dans lequel le gaz est de l'air propre ayant 100 particules ou moins, par pied cube, avec un diamètre de 0,3 µm ou moins.
